Europäisches Patentamt

European Patent Office

Office européen des brevets

(11) Publication number: **0 579 116 A2**

# EUROPEAN PATENT APPLICATION

(21) Application number: **93110946.6**

(22) Date of filing: **08.07.93**

(51) Int. Cl.5: **G11B 23/087**, G11B 15/26

(30) Priority: **13.07.92 US 912269**

(43) Date of publication of application:
**19.01.94 Bulletin 94/03**

(84) Designated Contracting States:
**DE FR GB IT**

(71) Applicant: **MINNESOTA MINING AND
MANUFACTURING COMPANY
3M Center,
P.O. Box 33427
St. Paul, Minnesota 55133-3427(US)**

(72) Inventor: **Schoeppel, Wolfgang G.,c/o
Minnesota Min.& Man.Co.
2501 Hudson Road, P.O. Box 33426
St.Paul, Minnesota 55133-3427(US)**
Inventor: **Chernega, John G.,c/o Minnesota
Min.& Man.Co.**

2501 Hudson Road, P.O. Box 33427
St. Paul, Minnesota 55133-3427(US)
Inventor: **McCrea, Ray G.Jr., Minnesota Min. &
Man. Co.**
2501 Hudson Road, P.O. Box 33427
St. Paul, Minnesota 55133-3427(US)
Inventor: **Smith, David P., Minnesota Min. &
Man. Co.**
2501 Hudson Road, P.O. Box 33427
St. Paul, Minnesota 55133-3427(US)
Inventor: **Zwettler,Christopher J.,c/o
Minnesota Min.& Man.Co**
2501 Hudson Road, P.O. Box 33427
St. Paul, Minnesota 55133-3427(US)

(74) Representative: **VOSSIUS & PARTNER
Postfach 86 07 67
D-81634 München (DE)**

(54) **Drive belt for magnetic tape cartridge.**

(57) A drive belt for belt driven magnetic tape cartridges, which belt is characterized by a tangent modulus of elasticity in the range of 30 - 100 MPa, measured while the belt is at 1.5 - 6 Newtons tension.

Belt is polyurethane produced by extrusion. Belt is annealed while it is stretched in the range of 200 - 500 % elongation.

Benefits of the improved belt include less dependence of tape tension on the amount of tape wound or unwound on the cartridge reels.

**Fig. 1**
**Prior Art**

This invention is in the field of magnetic recording tape cartridges, specifically belt driven cartridges. It concerns an improvement in elastomeric belts used in such cartridges.

Belt driven recording tape cartridges, which may also be called tape packs, include a shell defining a thin, generally rectangular enclosure within which are supported a pair of reels having hubs. A length of magnetic tape is wound upon the reels and can be wound upon one as it is unwound from the other and vice versa. There is also a thin, continuous, flexible and elastic drive belt, for turning the reels in one direction or the other, which is located on a belt path often defined by rollers and/or guides within the cartridge. U.S. Patent 3,692,255 (Von Behren), the disclosure of which is incorporated by reference herein, describes such tape cartridges in more detail.

In the Von Behren patent, an elastomeric drive belt is stretched around a drive roller, a pair of belt guide rollers, and part of the periphery of the magnetic tape wound upon each reel, so that the belt contacts the magnetic tape on the reels. Thus, as installed, the drive belt is under tension, e.g., greater than 2 Newtons (N). The tension in the belt and the contact between it and the magnetic tape provide the necessary engagement force to drive the tape reels. Belt tension should be adequate to permit rapid acceleration and deceleration of the tape without slippage. A tension which is too low can cause slippage; while, a tension which is too high can increase the power needed to drive the tape.

Belt tension can also affect the head/media interface, i.e., the quality of the contact between the magnetic recording or read transducer head and the magnetic tape which is in tension as it is transported along a tape path in the cartridge. In the Von Behren patent, there is a door in one side, or edge wall, of the cartridge which opens when it is in a tape drive to allow access of a magnetic head to the tape. The head penetrates into the cartridge and pushes against the tape so that the tape wraps partly around the head contour. The head displaces the tape typically about 70 mils (1.8 mm) from the location it occupies when the cartridge is outside a tape drive.

Polyurethane is known to be a good material of construction for tape cartridge drive belts, see U.S. Patent 4,474,342. U.S. Patent 4,466,564 describes a belt which has surface discontinuities to promote the release of air from between the surfaces of the tape and the belt.

The object of this invention is to provide improved belts to enhance cartridge performance, as the speed of the tape transport of such cartridges increases, and to increase the life of cartridges for archival data storage.

This invention is for the purpose of improving the stress relaxation and stress-strain properties of elastomeric tape cartridge belts, while maintaining the desirable properties of known belts. The invention is an improved belt with very good tension stability over time, and a modulus of elasticity in a desired range for rapid tape transport. It can be described as a continuous polymeric belt which comprises a polyurethane and which is characterized by a tangent modulus of elasticity (E), measured while the belt is maintained at a tension in the range of 1.5 - 6N, in the range of 30 - 100 MegaPascals (MPa), preferably 40-80 MPa.

It is preferably characterized by a stress relaxation indicated by loss of no more than 40% of its original tension when the belt has been stretched to obtain a tension in the range of 2 - 6 N and held at that tension for 123 hours at 65°C.

For purposes of this description, the term modulus of elasticity is defined as the slope of the stress strain curve in the range of stress of interest (e.g., a tension in the range of 2 - 6 N) also known as tangent modulus, see ASTM specifications E6 and D 1456-86.

In this description, the stress used is true stress based on the cross sectional area of the belt as stretched and installed in the tape cartridge, not on the area of the unstretched belt. As installed, the belt cross sectional area is substantially less than its original unstretched cross section.

An alternate way of expressing the inventive concept is in terms of k factor, where $k = 1/(Area)(E)$ in the same tension range as mentioned above (2-6N). The inventive belts have a k in the range of 0.007 - 0.017 oz.$^{-1}$ or 0.025-0.064 N$^{-1}$. k may be called compliance.

One class of polyurethanes found useful for the inventive belts is the class of polyester polyurethanes derived from methylene di-p-phenylene isocyanate (MDI), 1,4,-butanediol, and adipic acid. Representative of such polyurethanes are the Desmopan polyurethanes sold by Miles, Inc., of Pittsburgh, Pennsylvania, such as Desmopan 392 and 385.

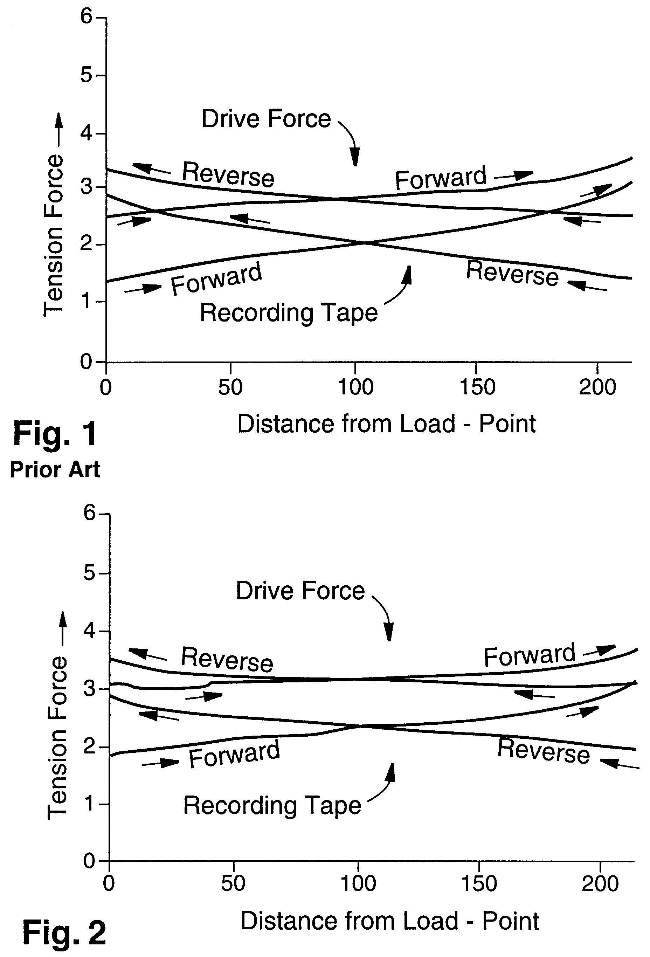

Figure 1 is a graph of tape tension vs. distance from load point (in feet) for a belt driven tape cartridge exemplary of the state of the art. There are two pairs of crisscrossed lines on the graph, one pair for drive force, and one pair for tension measured in the magnetic tape. The drive force represents the force applied at the drive roller of the tape cartridge (described hereinafter) to move the tape at a particular speed. The forward lines (arrow pointing from left to right) represent measured tension or force as the tape is transported from one reel (reel 1) to the other (reel 2) beginning with the maximum amount wound on reel 1. The reverse lines (arrow pointing from right to left) represent measured tension or force as the tape is transported in the opposite direction beginning with the maximum tape wound on reel 2 and ending with the maximum wound back on reel 1. The condition of the maximum tape wound upon reel 1 is called "beginning of tape" or BOT, and the condition of the maximum tape being wound upon reel 2 is called "end of tape" or EOT.

Figure 2 is a graph similar to Figure 1, but representing data from a tape cartridge made with a drive belt of this invention.

As mentioned above, the raw material for the inventive drive belt is a polyester polyurethane. It is a thermoplastic polyurethane typically furnished as pellets or granules. The following are some of the desired characteristics of the polymer:

- tear strength (measured by DIN 53504): 45 +/- 3 MPa
- elongation at break (DIN 53504): 450 - 600%
- hardness (Shore A, DIN 53505): 84 - 98
- compression set (22 hours at 70°C): no more than 55%
- density: 1.15-1.25 g/cm$^3$
- Melt Flow Index
  (ASTM D 1238 at 200°C/ 10 kg.):     >16, preferably 20 +/-4 g/10min.
- for polymer made from MDI, 1,4-butanediol, and adipic acid, typical ratios (expressed in mole percent) of the monomers are respectively: 13 - 50% MDI, 25 - 55% 1,4 butane diol, and 15 - 40% adipic acid, preferably 13-17% MDI, 45-55% 1,4 butane diol and 33-37% adipic acid.
- preferably minimal concentration of additives (such as mold release agents, antiblocking agents, waxes, oils, pigment, etc.) which would affect frictional properties of the belt. The concentration of such additives should be low enough so that they will not bloom to the surface of the belt under ambient conditions to which the belt will be exposed.

One polyurethane found useful in the inventive belt is Desmopan 392. As furnished, it can contain a very small concentration (substantially less than 0.5%) of residual free (unbonded) isocyanate, such as 2,6-diisopropylphenyl isocyanate (DPPI), as indicated by Fourier transform infrared spectroscopy (FTIR). Because of this isocyanate, it is possible for the Desmopan 392 polyurethane to undergo reaction during extrusion, such as chain extension or crosslinking reaction (for example by formation of biurets or allophonates).

This chain extension and/or light crosslinking can extend the molecular weight range of the polymer after extrusion. Light crosslinking or chain extension is indicated by the insolubility of the polymer.

Molecular weight measurements for two of the materials for the inventive belt (Desmopan 385 and 392) and a polyurethane which has been used in commercial tape cartridge belts (Estane 58409 from B. F. Goodrich) are shown in the table below:

|  | Estane Belt | Desmopan 392 | Desmopan 385 | Desmopan 385** |
|---|---|---|---|---|
| **Before Extrusion:** | | | | |
| Mn | 30,300 | 37,000 | 85,400 | 82,300 |
| Mw | 129,500 | 267,000 | 221,000 | 222,000 |
| ***p | 4.3 | 7.2 | 2.6 | 2.7 |
| Mz | 257,000 | 750,000 | 453,000 | 439,000 |
| **After Extrusion** | | | | |
| Mn | 27,000 | 30,000* | 60,000 | 57,900 |
| Mw | 108,000 | 277,000* | 128,000 | 116,000 |
| p | 4.1 | 9.2* | 2.1 | 2.0 |
| Mz | 197,00 | 1,818,000* | 230,000 | 183,000 |

\* Data is for soluble fraction extracted from gelled sample before gel phase chromatography analysis.

\*\* Aged at room temperature and also extruded at a higher temperature than other Desmopan samples.

\*\*\* p signifies polydispersity and is equal to Mw/Mn.

From the table, one can see that, after extrusion into the sheet form used for the belt, the two Desmopan polyurethanes have Mn > 29,000 (Mn is the number average molecular weight defined by $\Sigma n_i M_i/\Sigma n_i$); Mw > 115,000 (Mw is the weight average molecular weight defined by $\Sigma n_i M_i^2/\Sigma n_i M_i$), and (except for the Desmopan 385 which was aged and extruded at a higher temperature) Mz > 220,000 (Mz is the molecular weight equal $\Sigma n_i M_i^3/\Sigma n_i M_i^2$), and Mz of Desmopan 392 is greater than 500,000. A further indication of the crosslinking of the Desmopan 392 polymer after extrusion is the fact that a sample of the material did not dissolve in tetrahydrofuran (THF) and cyclohexanone solvents; while, a sample of the existing commercial belt material did dissolve.

As explained in U.S. Patent 4,466,564 the disclosure of which is incorporated by reference herein, a suitable method for manufacturing tape cartridge belts is to stamp them as rings or annuli from sheets of polyurethane about 3 - 10 mils (76 - 254 micrometers) thick. The present belt is formed by extruding the polyurethane and heat treating the belt by stretching it to induce tension. While it is under tension, the belt is exposed to a source of infrared light to anneal it, or cause it to relax, over a short period of time. In more detail, one process comprises the following steps:

1. Polyurethane raw material granules are dried to preferably less than 0.02 weight percent water using hot air in the presence of a desiccant.

2. It is extruded into a sheet typically at a temperature in the softening range for the polymer (e.g., 190°- 210°C). The extruder discharges through a die depositing the sheet onto a steel roll coated with a silicone release agent immediately prior to entering a nip with a 6 mil (152 micrometer) thick release liner made of polypropylene film. Both rolls which form the nip are cooled, and the roll which contacts the liner is silicone rubber coated.

3. The combination of extruded polyurethane sheet and liner is transported through a nip roll and calendering roll stack. It is during this operation that a matte finish is impressed onto the surface of the extruded polyurethane, and the sheet is calendered to the desired thickness. It is highly desirable for the belt driven tape cartridge described herein that uniform belt thickness be maintained for consistent performance of the cartridge. Non-uniformity can cause uneven stretching with the resultant possibility of a broken belt or some other defect in performance.

4. The sheet is slit to desired width.

5. The rings (later to become belts) are cut or punched from the sheet. One exemplary belt, for the DC 600 Data Cartridge sold by Minnesota Mining and Manufacturing Company has, at this point in the process, 1.88 in. (48mm.) outside diameter, 1.27 in. (32mm.) inside diameter, and a thickness of 5.5-8.5 mils (0.14-0.22mm). Other typical dimensions are given in U.S. Patent 4,466,564.

6. The rings are then heat treated by holding them at an elevated temperature, below the temperature at which the polymer would degrade, for sufficient time to at least partly anneal or stress relax the polymer, typical conditions being 65 - 100°C for 4 - 6 hours.

7. The rings are then stretched while being heat treated or annealed. Typically, the belts are stretched to 200 - 500% This operation is called hot stretching and can be carried out by stretching the belt between two rolling rollers to the desired tension or elongation, and causing it to move past a heat source, such as an infrared lamp. An infrared line heater having a maximum output of 1,000 watts has been used in hot stretching, and exposure time of the moving belt to the lamp is usually less than 1 minute, e.g., 2.5 seconds. The correct exposure time and light intensity for a given tension decrease can be determined experimentally.

A useful line heater has elliptical reflectors to focus infrared light on the belt a length of which is oriented to be exposed to the lamp about 10 cm. from the lamp. One such lamp is the Infrared Line Heater 5193-2 from Research, Inc., Minneapolis, Minnesota. The lamp has been set at 350 watts output at the beginning of the 2.5 second exposure time, and it has been gradually increased to 450 watts by the end of the exposure time, raising the belt temperature (one typical temperature being 100°C).

The belt should be pigmented or coated with a pigmented coating prior to this process so that it absorbs the infrared energy. This can be accomplished by adding pigment to the polyurethane in process step 2 above. For example, pellets or powder of a black master batch comprising 30% carbon black and 70% polyurethane can be added to the feed of the extruder in a proportion sufficient to color the extruded polymer (e.g., about 4% of the total polyurethane).

The hot stretching process causes the tension in the belt to decrease. One could stop the process by means of a tension sensor on the belt which would indicate (or have a set point at) the desired final tension. Typically, a starting tension of 33-37 oz. (9-10N) will be reduced to a measurably lesser tension, such as 14-20 oz. (4-6N).

8. The annealed belts are then installed on tape cartridges. As installed, the DC 600 belt mentioned above is about 17 inches (43.2cm.) long, 4mm. wide, 3.4 mils (86 micrometers) thick on one edge and 4.1 mils (104 micrometers) thick on the other edge. The thickness difference results from the differential elongations that the inside and outside edges of the annulus experience. These dimensions and the degree of stretching vary depending upon the cartridge into which the belt is to be installed.

The quality of magnetically reproduced and recorded information depends upon precise tracking of the drive belt during transport (playback, recording, fast forward and rewinding). The quality of such information also depends upon maintaining uniform drive belt tension and tape tension during tape transport. Irregularities in drive belt tracking or in drive belt or tape tension, can adversely affect recording performance.

Although the invention is not limited to the parameters given below, belts made in accordance with this invention have been characterized by:

- thickness in the range of 100- 400 micrometers, before the hot stretching step (step 7 above);
- tension, as installed in tape cartridge >7 oz. (2N); and
- width variation +/- 127 micrometers.

It is desired that the minimum tension (e.g., at least 7 oz. (2N) be maintained over the useful life of the tape cartridge. One test for this is to measure belt tension periodically during extended cycling of the tape cartridge unwinding one reel and then rewinding the tape back onto it at a speed of 120 in./sec. (3 m./sec.).

The tension of the magnetic tape in a tape cartridge is affected by belt tension. Referring to the drawings, it is evident that the tension in the tape and the drive force follow the same general pattern from BOT to EOT. Looking at Figure 1, one can see that (going in the forward direction) tension in the tape and drive force both increase from BOT to EOT, and, in the reverse direction, they both increase from EOT to BOT. Looking at just the curves for drive force or the tape tension, the combination of the forward and reverse curves look a bit like a bow tie, and the change in tension from BOT to EOT may be referred to as the bow tie effect, or the tape tension range.

The units in both Figures 1 and 2 are the same. The units of the vertical axis are ounces force, or each division is 0.278N. It is evident that the bow tie effect in the case of a tape cartridge made with the inventive belt is less pronounced than with the prior art belt. Looking at the difference between tension at EOT and tension at BOT in the forward direction, that difference in the Figure 1 tape is about 1.7 oz.; whereas, the same difference in the tape of the cartridge with the inventive belt is 1.1 oz. In the drive force, the corresponding differences are: 1.0 for the Figure 1 cartridge belt and 0.5 for the inventive cartridge.

It is desired to decrease the tape tension range from BOT to EOT or the amount of bow tie, since it represents a variation around the specified characteristics of the tape cartridge which must be considered in the design of tape cartridge components. For example, with a smaller bow tie effect, the drive motor can be specified with lower power requirement. Also, the interface between the magnetic transducer head and the tape is affected by the tension, and thus the bow tie. As tension changes, the interaction between the tape and the head changes somewhat.

It is also desired that decay or loss in belt tension with time be minimal. One test for belt tension decay (or stress relaxation) is to stretch the belt over four corner posts in a rectangular configuration to roughly the same elongation as it would have in the tape cartridge; measure tension in the belt; place it in an oven at elevated temperature (e.g., 65°C) for a specified time (e.g., 24 hours); and measure the tension in the belt after the test. The decrease in tension in this four corner test is a measure of stress relaxation.

The inventive belt is incorporated into a tape cartridge, as described briefly above. The cartridge has a top wall, a bottom wall and a peripheral edge wall. The door, mentioned above, pivots on a stud or hinge for access to the interior of the cartridge shell, and it is biased by a spring to keep in normally closed. Guide grooves may be located in the edge walls which are perpendicular to the edge wall having the door, and which would normally face the tape drive when the cartridge is inserted into the drive.

The reels and their hubs are supported on the cartridge shell for free rotation about spaced parallel axes. In the Von Behren cartridge mentioned, the magnetic tape is wound upon the reels and follows a guide path defined by guide pins positioned to cause it to travel just behind the cutaway portion of the edge wall which can be opened by opening the door.

The belt path includes wrapping the belt partly around a recessed circumferential groove or small diameter portion of a drive roller which is supported for free rotation by a shaft parallel to the axes of the reels, and located near the edge wall of the cartridge. In the Von Behren cartridge, the larger diameter portion of the drive roller extends over the magnetic tape path to protect the tape from contact with the drive puck of the drive apparatus which contacts the drive roller in order to work the tape cartridge.

The belt path also includes, in the Von Behren cartridge, a pair of belt guide rollers located approximately in the corners of the cartridge away from the side having the door. The guide rollers are supported on the cartridge shell by shafts for rotation about axes parallel to the axis of the belt drive roller. The belt guide rollers and their support shafts apply a drag to the belt as it travels along the belt path.

The components of the tape cartridge can be assembled by techniques within the skill of the art. The benefits of the invention are:

- lower bow tie, expressed as the difference between tape tension at EOT and tape tension at BOT in the forward wind direction for the belt driven tape cartridges. In cartridges made in reducing this invention to practice, bow tie has been reduced up to 30% compared to that of commercially available tape cartridges.
- lower stress relaxation, or belt tension decay over time.
- ability of the belt to endure higher running speeds and temperature fluctuations (e.g., within the range of -20° to 60°C).

The invention will be further clarified by the following examples.

EXAMPLE I

Stress strain data were taken for an embodiment of the inventive belt (Desmopan 385) and also for a belt exemplary of those in commercially available tape cartridges (Estane polyurethane). Original sample length tested was 12.7 mm. In the elongation (or tension) range of interest, the modulus of elasticity for the two belts is shown in the table below:

Table 1

| Belt Material | Estane | Desmopan 385 |
|---|---|---|
| Cross Sectional Area | $0.36 \text{ mm}^2$ | $0.54 \text{ mm}^2$ |
| Modulus of Elasticity | 113 MPa | 47 MPa |

These data show that the inventive belt has a modulus within the range described above; while, the Estane belt does not.

EXAMPLE II

In order to test the stress relaxation property of the invention, belts were made from Desmopan 385 polyurethane and also from a polyurethane used in belts for commercially available tape cartridges (Estane 58277 labelled Control in the table below). In both cases, the belts were annealed before being tested. That is, they were hot stretched with a 32 oz. (908g) load by the process described above. These belts were tested by means of the four corner stress relaxation test described above at 65°C for 165 hours. All the belts tested had the same width but varied somewhat in thickness, as indicated in the table below which also shows the results of tension measurements.

Table 2

| Belt Material | Thickness (micrometers) | Tension at 0 hrs. | Tension at 123 hrs. | Tension at 165 hrs. | Percent Decay |
|---|---|---|---|---|---|
| | | oz. | oz. | oz. | |
| Control | 178 | 17.3 | 9.9 | -- | 43 |
| Desmopan 385 | 178 | 14.3 | -- | 9.7 | 32 |
| Desmopan 385 | 267 | 12.6 | -- | 10.9 | 13 |
| Desmopan 385 | 356 | 11.6 | -- | 10.5 | 9 |

The above results demonstrate that the inventive belts experienced somewhat less stress relaxation or tension decay and over a longer period at elevated temperature than the control. All the inventive belts experienced less than 40% tension decay over the duration of the test.

**Claims**

1. A continuous polymeric belt which comprises a polyurethane and which belt is characterized by a modulus of elasticity, measured while the belt is maintained at a tension in the range of 1.5 to 6 Newtons, in the range of 30 to 100 MegaPascals.

2. The belt of claim 1 which is further characterized by a stress relaxation indicated by loss of no more than 40% of its original tension when the belt has been stretched to obtain a tension in the range of 2 to 6 Newtons and held at that tension for 123 hours at 65°C.

3. The continuous polymeric belt of clam 1 or 2 of which the polyurethane is derived from methylene di-p-phenylene isocyanate, 1,4-butanediol, and adipic acid.

4. The continuous polymeric belt of anyone of clams 1 to 3 which is further characterized by a Z-average molecular weight $M_z$ greater than 220,000, as determined by gel phase chromatography using a polystyrene standard.

5. A magnetic tape assembly comprising:
   A. a magnetic tape wound upon a pair of reels, a length of said magnetic tape extending from one reel to the other; and
   B. a continuous, flexible polymeric belt, for driving the pair of reels, located on a belt path part of which wraps around part, but not all, of the periphery of the magnetic tape wound upon each reel, so that the flexible belt contacts the magnetic tape on the reels, said belt comprising a polyurethane characterized by a modulus of elasticity, measured while the belt is maintained at a tension in the range of 1.5 to 6 Newtons, in the range of 30 to 100 MegaPascals.

6. A continuous polymeric belt which comprises a polyurethane and which belt is characterized by a k factor in the range of 0.025 to 0.064 Newtons $^{-1}$ when the belt is maintained at a tension of 2 to 6 Newtons.

**Fig. 1**
**Prior Art**

**Fig. 2**